# EUROPEAN PATENT APPLICATION

(11) **EP 2 744 015 A1**
(43) Date of publication of application: **18.06.2014**
(21) Application number: 12821963.1
(22) Date of filing: 30.07.2012
(51) Int. Cl.: H01M 2/10, H01M 2/12, H01M 10/50

(54) **BATTERY BLOCK AND BATTERY MODULE COMPRISING SAME**

(30) Priority: 10.08.2011 JP 2011174740
(71) Applicant: Panasonic Corporation, Kadoma-shi, Osaka 571-8501 (JP)
(72) Inventor: TSUJIOKA, Katsuji, Osaka 540-6207 (JP); NAKASHIMA, Takuya, Osaka 540-6207 (JP)
(74) Representative: Grünecker, Kinkeldey, Stockmair & Schwanhäusser
(86) International application number: PCT/JP2012/004827
(87) International publication number: WO 2013/021573

(57) **Abstract**

A battery block includes a plurality of tubular batteries 100 arranged and housed in a holder 20. Each of the batteries 100 includes a first external terminal, and a second external terminal. The holder 20 includes a first holder 21 having first tubular housing portions 21a housing upper portions of the batteries 100 in an axis direction, and a second holder 22 having second tubular housing portions 22a housing lower portions of the batteries 100 in the axis direction. The first holder 21 electrically connects the first external terminals together. The second holder 22 electrically connects the second external terminals together.

## Description

### TECHNICAL FIELD

The present disclosure relates to battery blocks and battery modules including the battery blocks.

### BACKGROUND ART

In recent years, use of battery modules as power supply for driving motors of vehicles etc., or household or industrial power supply has been expected. Such battery modules include a plurality of assembly batteries formed by connecting a plurality of batteries in series and/or parallel.

As an example battery module, for example, Patent Document 1 suggests a battery module (i.e., a battery pack). The battery module shown in Patent Document 1 includes a plurality of battery blocks. Each battery block includes a plurality of batteries, a battery holder having insertion portions to which the batteries are inserted, a first lead plate welded to one end surfaces of the plurality of batteries, and a second lead plate welded to the other end surfaces of the plurality of batteries.

### CITATION LIST

### PATENT DOCUMENT

PATENT DOCUMENT 1: Japanese Unexamined Patent Publication No. 2011-49011

### SUMMARY OF THE INVENTION

### TECHNICAL PROBLEM

Battery modules are mounted in limited spaces, for example, inside vehicles, etc. Since battery modules mounted in limited spaces need to charge predetermined power, an increase in the volumetric energy density of each battery module is important.

However, the conventional battery blocks shown in Patent Document 1 require numbers of parts corresponding to functions such as a battery holder having a function of housing batteries, and a lead plate having a conductive function of electrically connecting a plurality of batteries. Thus, the volumetric energy density of the battery blocks is difficult to increase. That is, the volumetric energy density of the battery module is difficult to increase.

In view of the foregoing, it is an objective of the present disclosure to increase the volumetric energy density of battery blocks.

### SOLUTION TO THE PROBLEM

A battery block according to the present disclosure includes a plurality of tubular batteries arranged and housed in a holder. Each of the batteries includes a first external terminal, and a second external terminal. The holder includes a first holder having first tubular housing portions housing upper portions of the batteries in an axis direction, and a second holder having second tubular housing portions housing lower portions of the batteries in the axis direction. The first holder electrically connects the first external terminals together. The second holder electrically connects the second external terminals together.

A battery module according to the present disclosure includes the battery block according to the present disclosure. The battery block includes a plurality of battery blocks. The plurality of battery blocks are arranged such that holders are adjacent to one another in an arrangement direction of the batteries, and the holders adjacent to one another in the arrangement direction are electrically connected together.

### ADVANTAGES OF THE INVENTION

The battery block and the battery module including the battery block according to the present disclosure increase the volumetric energy density of the battery block.

### BRIEF DESCRIPTION OF THE DRAWINGS

[FIG. 1] FIG. 1 is a cross-sectional view illustrating the structure of a battery used for a battery block according to a first embodiment of the present disclosure.
[FIG. 2] FIG. 2 is an exploded perspective view illustrating the structure of the battery block according to the first embodiment of the present disclosure.
[FIG. 3] FIG. 3 is a perspective view illustrating the structure of the battery block according to the first embodiment of the present disclosure.
[FIG. 4] FIG. 4 is a cross-sectional view illustrating the structure of the battery block according to the first embodiment of the present disclosure. Specifically, FIG. 4 is a cross-sectional view taken along the line IV-IV of FIG. 3.
[FIG. 5] FIG. 5 is an exploded perspective view illustrating the structure of a battery block according to a second embodiment of the present disclosure.
[FIG. 6] FIG. 6 is a perspective view illustrating the structure of the battery block according to the second embodiment of the present disclosure.
[FIG. 7] FIG. 7 is a cross-sectional view illustrating the structure of the battery block according to the second embodiment of the present disclosure. Specifically, FIG. 7 is a cross-sectional view taken along the line VII-VII of FIG. 6.
[FIG. 8] FIG. 8 is an exploded perspective view illustrating the structure of a battery block according to a variation of the second embodiment of the present disclosure.
[FIG. 9] FIG. 9 is a perspective view illustrating the structure of the battery block according to the variation of the second embodiment of the present disclosure.
[FIG. 10] FIG. 10 is a cross-sectional view illustrating the structure of the battery block according to the variation of the second embodiment of the present disclosure. Specifically, FIG. 10 is a cross-sectional view taken along the line X-X of FIG. 9.
[FIG. 11] FIG. 11 is a perspective view illustrating the structure of a battery module according to a third embodiment of the present disclosure.
[FIG. 12] FIG. 12 is a perspective view illustrating the structure of a battery block used for a battery module according to a first variation of the third embodiment.
[FIG. 13] FIG. 13 is a perspective view illustrating the structure of the battery module according to the first variation of the third embodiment of the present disclosure.
[FIG. 14] FIG. 14 is a perspective view illustrating the structure of a connecting member.
[FIG. 15] FIG. 15 is a perspective view illustrating the structure of a battery module according to another example of the third embodiment of the present disclosure.
[FIG. 16] FIG. 16 is a perspective view illustrating the structure of a battery module according to a second variation of the third embodiment of the present disclosure.
[FIG. 17] FIG. 17 is a perspective view illustrating the structure of a battery module according to yet another example of the third embodiment of the present disclosure.

### DESCRIPTION OF EMBODIMENTS

Embodiments of the present disclosure will be described hereinafter with reference to the drawings. The following embodiments are illustrative only. The present disclosure is not limited thereto. Various modifications and changes can be made to the present disclosure within the scope of the present disclosure. Such modifications and changes fall within the true spirit of the present disclosure. The drawings show elements in size proportions suitable for illustration, and the illustrated size proportions may differ from actual ones.

### First Embodiment

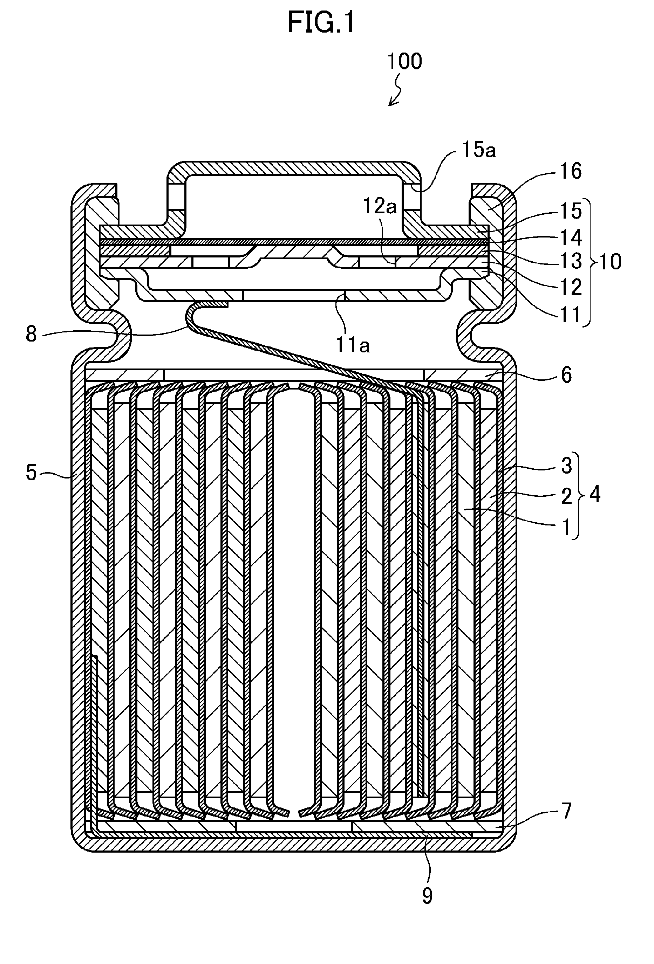

A battery block according to a first embodiment of the present disclosure will be described below with reference to FIGS. 1, 2, 3, and 4.

### -Battery-

FIG. 1 is a cross-sectional view illustrating the structure of a battery used for the battery block according to the first embodiment of the present disclosure.

As shown in FIG. 1, a battery 100 is, for example, a cylindrical lithium ion secondary battery. As such, a lithium ion secondary battery used as a power source for a portable electronic device such as a laptop, in other words, a high performance general battery is applied to the battery 100 used for a battery block, thereby increasing the performance of the battery block and reducing the costs.

As shown in FIG. 1, an electrode group 4, which is formed by winding a positive electrode 1 and a negative electrode 2 with separator 3 interposed therebetween, is housed in a battery case 5 together with a nonaqueous electrolyte (not shown). An insulating plate 6 is provided on the upper end of the electrode group 4. An insulating plate 7 is provided on the lower end of the electrode group 4.

The positive electrode 1 is connected to a metal plate 11 forming a sealing body 10 via a positive electrode lead 8. The negative electrode 2 is connected to the bottom of the battery case 5 via a negative electrode lead 9.

An insulating film (not shown) covers the outer side surface of the battery case 5. As a result, the outer bottom surface of the battery case 5 functions as an electrode terminal of the negative electrode (i.e., a negative electrode terminal).

An opening of the battery case 5 is sealed by the sealing body 10 with a gasket 16 interposed therebetween.

The sealing body 10 includes the metal plate 11, a metal plate 12, a gasket 13, a valve body 14, and a cap 15. The metal plate 11 has a recessed portion recessed downward. The metal plate 12 has a raised portion raised upward. The cap 15 has a raised portion raised upward.

The periphery of the metal plate 11 is connected to the periphery of the metal plate 12. The raised portion of the metal plate 12 is connected to the center of the valve body 14. The periphery of the valve body 14 is connected to the periphery of the cap 15. The gasket 13 is provided between the periphery of the metal plate 12 and the periphery of the valve body 14. As such, the cap 15 is electrically connected to the metal plate 11, which is electrically connected to the positive electrode 1, via the metal plate 12 and the valve body 14. The upper surface of the raised portion of the cap 15 functions as an electrode terminal of the positive electrode (i.e., a positive electrode terminal).

An opening 11a is formed in the metal plate 11. An opening 12a is formed in the metal plate 12. An opening portion 15a is formed in the side surface of the raised portion of the cap 15.

If gas is generated in the battery, for example, by an internal short-circuit, the gas generated in the battery is exhausted outside the battery as follows. If gas is generated in the battery 100 and the pressure in the battery 100 rises, the valve body 14 expands toward the cap 15 to disconnect the metal plate 12 from the valve body 14. This cuts off the current path. If the pressure in the battery 100 further rises, the valve body 14 is broken. As a result, the gas generated in the battery 100 is exhausted outside the battery 100 via the opening 11a of the metal plate 11, the opening 12a of the metal plate 12, the broken portion of the valve body 14, and the opening portion 15a of the cap 15.

While in this embodiment, a specific example has been described where the battery 100 is a lithium ion secondary battery, the present disclosure is not limited thereto. For example, a nickel-hydrogen battery may be used.

While in this embodiment, a specific example has been described where the tubular battery 100 is a cylindrical battery, the present disclosure is not limited thereto. For example, a rectangular battery may be used. In this specification, the tubular batteries include cylindrical batteries, rectangular batteries, etc.

### -Battery Block-

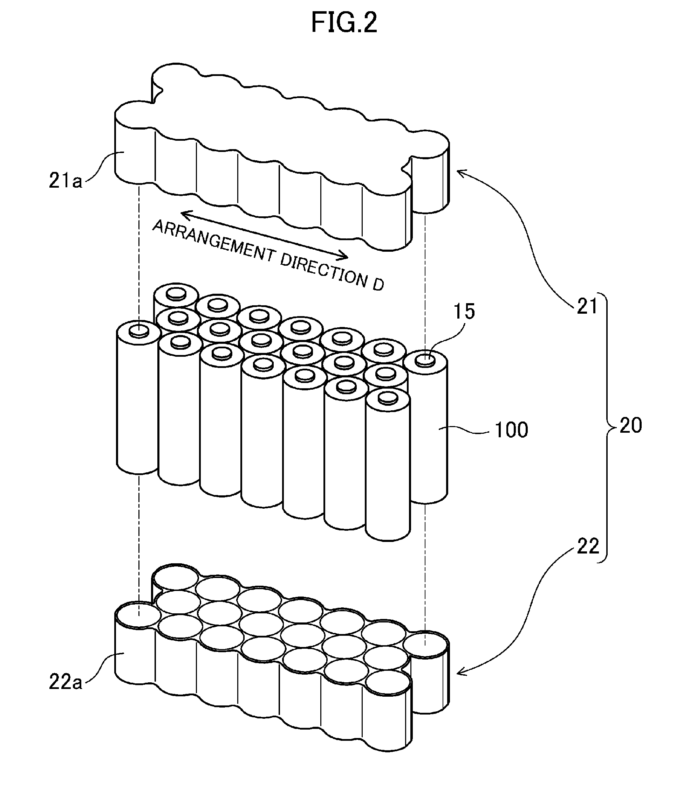

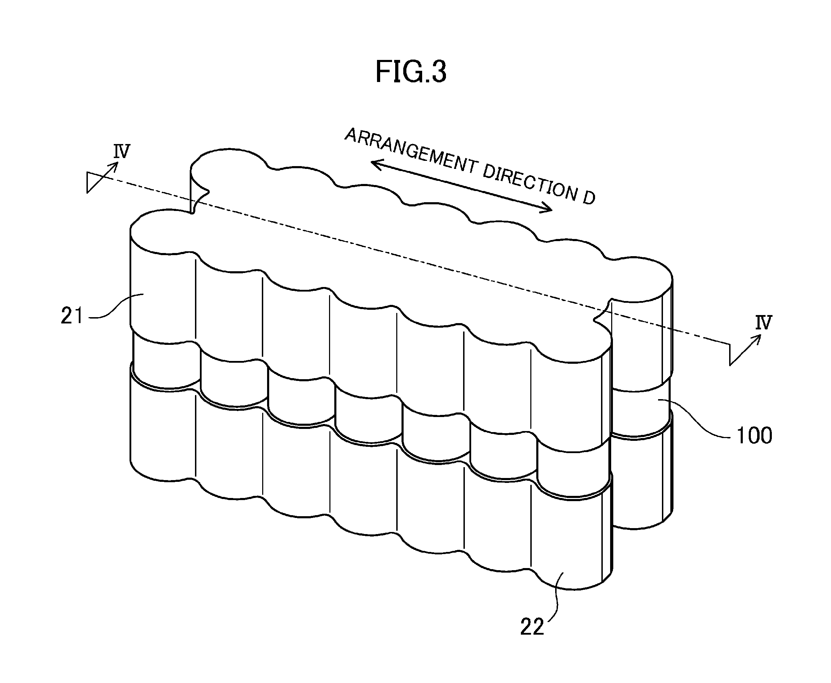

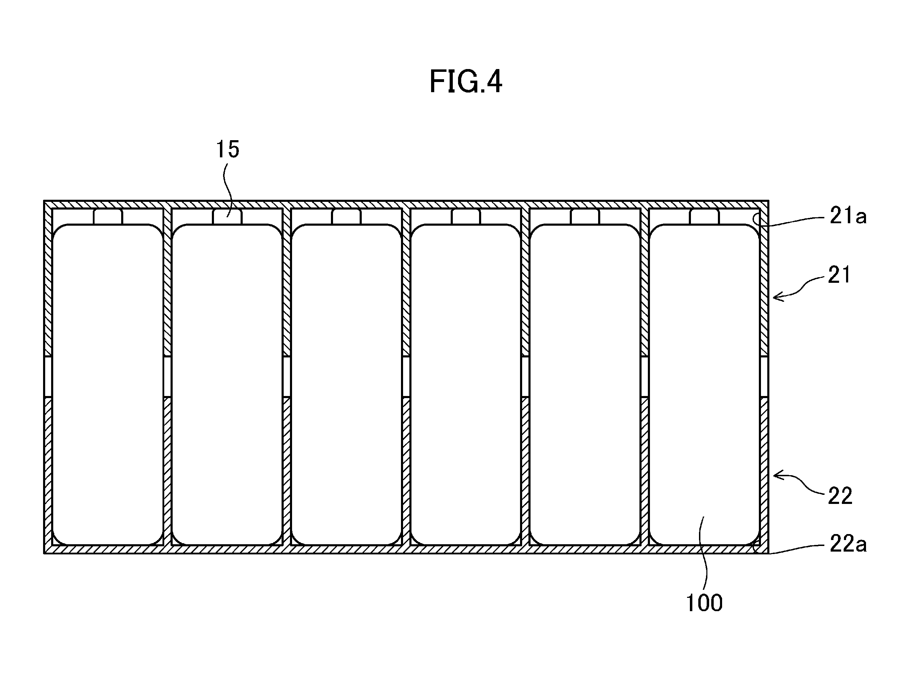

FIG. 2 is an exploded perspective view illustrating the structure of the battery block according to this embodiment. FIG. 3 is a perspective view illustrating the structure of the battery block according to this embodiment. FIG. 4 is a cross-sectional view illustrating the structure of the battery block according to this embodiment. Specifically, FIG. 4 is a cross-sectional view taken along the line IV-IV of FIG. 3.

As shown in FIGS. 2, 3, and 4, in the battery block according to this embodiment, a plurality of batteries 100 are arranged and housed in a holder 20. As shown in FIG. 2, the plurality of batteries 100 are placed, for example, in staggered arrangement. Specifically, twenty batteries 100 are arranged, for example, to have alignment of seven batteries 100 along the arrangement direction D, alignment of six batteries along the arrangement direction D, and alignment of seven batteries 100 along the arrangement direction D (i.e., 20 = 7 + 6 + 7).

The holder 20 includes a first holder 21 and a second holder 22. The first holder 21 has bottomed tubular housing portions (i.e., first housing portions) 21a housing the upper portions of the batteries 100 in an axis direction. The second holder 22 has bottomed tubular housing portions (i.e., second housing portions) 22a housing the lower portions of the batteries 100 in the axis direction. In this specification, the "axis direction" denotes the direction along which the winding axis of the electrode group 4 extends. The arrangement direction D is orthogonal to the axis direction.

The first holder 21 and the second holder 22 are made of conductive metal.

As shown in FIG. 4, each positive electrode terminal (i.e., the upper surface of the raised portion of each cap 15) is in contact with the inner bottom surface of the corresponding housing portion 21a of the first holder 21. The contact between the positive electrode terminal and the inner bottom surface of the housing portion 21a is welded at some portions. The first holder 21 electrically connects the positive electrode terminals together. That is, the first holder 21 functions as a current collector plate of the positive electrodes.

Each negative electrode terminal (i.e., the outer bottom surface of each battery case 5) is in contact with the corresponding housing portion 22a of the second holder 22. The contact between the negative electrode terminal and the inner bottom surface of the housing portion 22a is welded at some portions. The second holder 22 electrically connects the negative electrode terminals together. That is, the second holder 22 functions as a current collector plate of the negative electrodes.

As such, the plurality of batteries 100 housed in the holder 20 are connected in parallel.

As described, the insulating film (not shown) covers the outer side surface of each battery case 5. As a result, the side surfaces of the battery cases 5, which are electrically connected to the negative electrodes 2, are reliably insulated from the first holder 21, which functions as the current collector plate of the positive electrodes.

As shown in FIG. 4, the outer side surfaces of the upper portions of the batteries 100 abut the inner side surfaces of the housing portions 21a of the first holder 21. The outer side surfaces of the lower portions of the batteries 100 abut the inner side surfaces of the housing portions 22a of the second holder 22.

In view of heat release characteristics, the first holder 21 and the second holder 22 are preferably made of thermal conductive metal.

In view of reduction in the weight, the first holder 21 and the second holder 22 are more preferably made of light metal (metal with a small specific gravity). Specifically, for example, the first holder 21 and the second holder 22 are made of aluminum or aluminum alloy. The aluminum alloy may be, for example, Al-Mg-based alloy, Al-Mg-Si-based alloy, Al-Zn-Mg-based alloy, Al-Zn-Mg-Cu-based alloy, etc.

In this embodiment, the first holder 21 electrically connects the positive electrode terminals together, and the second holder 22 electrically connects the negative electrode terminals together. The holder 20 has not only the housing function of housing the batteries 100, but also the conductive function of electrically connecting the electrode terminals. This reduces the number of parts of a battery block. Thus, the battery block can be miniaturized, thereby increasing the volumetric energy density of the battery block.

In a battery block including a plurality of batteries, a large current flows to current collector plates in accordance with charge and discharge. Thus, there is a need to sufficiently obtain the cross-sectional areas of the current collector plates themselves to reduce the resistance of the current collector plates, thereby reducing self-heating of the current collector plates. However, in this embodiment, the first holder 21 housing the upper portions of the batteries 100 functions as the current collector plate of the positive electrodes, while the second holder 22 housing the lower portions of the batteries 100 functions as the current collector plate of the negative electrodes. Then, the first and second holders 21 and 22 obtain sufficient cross-sectional areas as current collector plates. This reduces the thicknesses of the first and second holders 21 and 22. As a result, the battery block is further miniaturized, thereby increasing the volumetric energy density of the battery block.

In this embodiment, the first holder 21 and the second holder 22 are made of thermal conductive metal. Even if the batteries 100 generate heat due to charge and discharge, the heat generated by the batteries 100 is efficiently conducted to the first holder 21 or the second holder 22, and released outside the first holder 21 or the second holder 22. This makes the temperature of the plurality of batteries 100 housed in the holder 20 uniform.

In this embodiment, the first holder 21 and the second holder 22 are made of thermal conductive metal. Even if specific ones of the plurality of batteries 100 housed in the holder 20 abnormally generate heat, the heat abnormally generated by the specific ones is efficiently conducted to the first holder 21 or the second holder 22, and released outside the first holder 21 or the second holder 22. This reduces thermal influence on the batteries adjacent to the specific batteries.

While in this embodiment, a specific example has been described where the insulating film covers the outer side surfaces of the battery cases 5, the present disclosure is not limited thereto. For example, an insulating film may cover at least the inner side surfaces of the housing portions 21a out of the housing portions 21a of the first holder 21 and the housing portions 22a of the second holder 22.

While in this embodiment, a specific example has been described where the plurality of batteries 100 are placed in the staggered arrangement, the present disclosure is not limited thereto.

### Second Embodiment

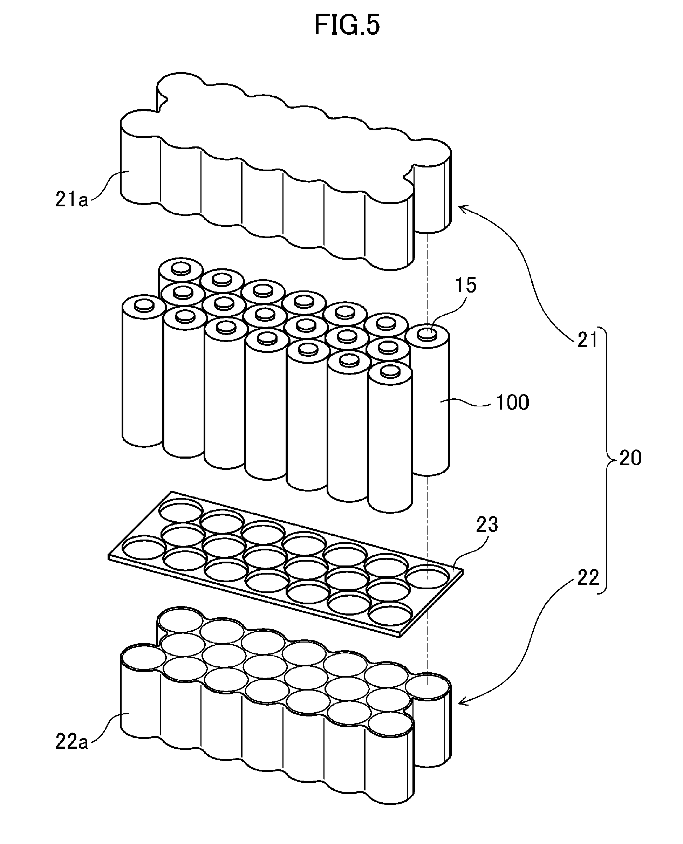

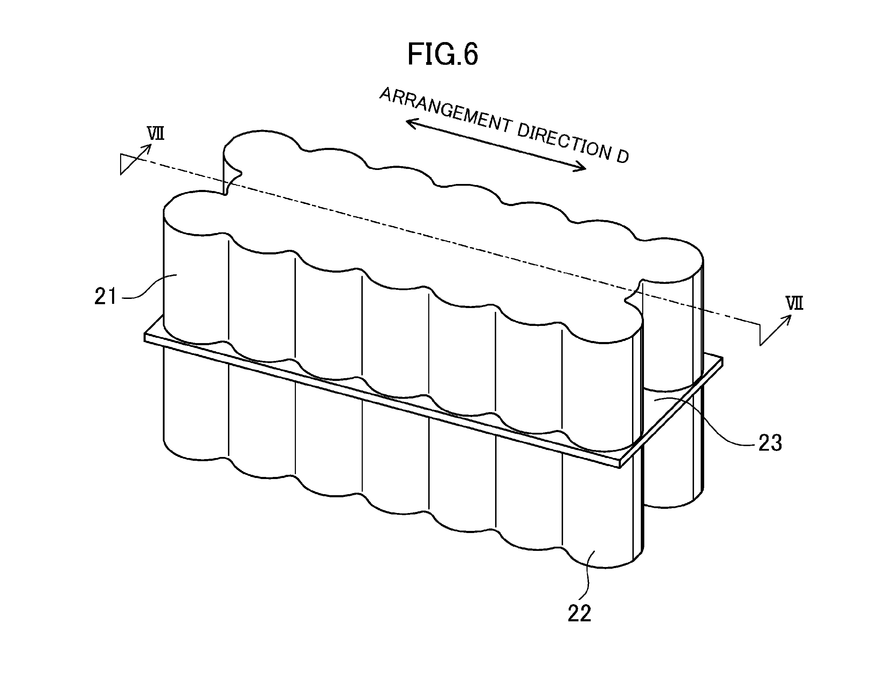

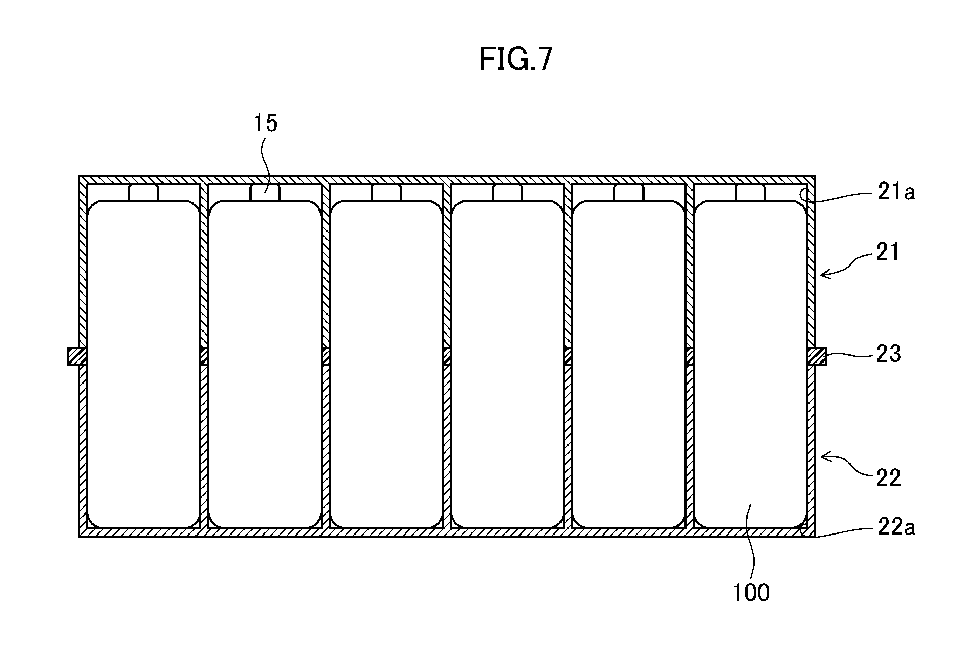

A battery block according to a second embodiment of the present disclosure will be described below with reference to FIGS. 5, 6, and 7. FIG. 5 is an exploded perspective view illustrating the structure of the battery block according to this embodiment. FIG. 6 is a perspective view illustrating the structure of the battery block according to this embodiment. FIG. 7 is a cross-sectional view illustrating the structure of the battery block according to this embodiment. Specifically, FIG. 7 is a cross-sectional view taken along the line VII-VII of FIG. 6. In FIGS. 5-7, the same reference characters as those shown in FIGS. 2-4 are used to represent elements equivalent to those in the first embodiment. Accordingly, in this embodiment, explanation similar to that in the first embodiment will be omitted as appropriate.

This embodiment differs from the first embodiment in the following respects.

In the first embodiment, as shown in FIGS. 2, 3, and 4, the end portions of the first holder 21 are spaced apart from the end portions of the second holder 22.

On the other hand, in this embodiment, as shown in FIGS. 5, 6, and 7, an insulating spacer 23 is provided between the first holder 21 and the second holder 22. As shown in FIG. 5, openings penetrated by the batteries 100 are formed in the spacer 23. As shown in FIG. 7, the end portions of the first holder 21 are in contact with the upper surface of the spacer 23. The end portions of the second holder 22 are in contact with the lower surface of the spacer 23.

The spacer 23 reliably insulates the first holder 21 functioning as the current collector plate of the positive electrodes from the second holder 22 functioning as the current collector plate of the negative electrodes.

The thickness of the spacer 23 preferably ranges from 0.01H to 0.5H, both inclusive, where the height of each battery 100 is H. If the thickness of the spacer 23 is smaller than 0.01H, insulation between the first holder 21 and the second holder 22 is difficult to obtain. Therefore, the thickness smaller than 0.01H is not preferable. If the thickness of the spacer 23 is greater than 0.5H, the contact areas between the outer side surfaces of the batteries 100 and the inner side surfaces of the housing portions 21a and 22a of the first and second holders 21 and 22 are small. It becomes then difficult to efficiently conduct the heat generated by the batteries 100 to the first and second holders 21 and 22. Thus, the thickness greater than 0.5H is not preferable.

The spacer 23 is made of an insulating material. Furthermore, the spacer 23 is preferably made of a fire-retardant material. Specifically, for example, the spacer 23 is made of, polystyrene, polypropylene, polyphenylene ether, a tetrafluoroethylene-perfluoroalkylvinylether copolymer, polycarbonate, polyphenylene sulfide, polybutylene terephthalate, etc.

This embodiment provides advantages similar to those of the first embodiment.

In addition, the spacer 23 is provided between the first holder 21 and the second holder 22. This prevents contact between the first holder 21 and the second holder 22 caused by external shock.

### Variation of Second Embodiment

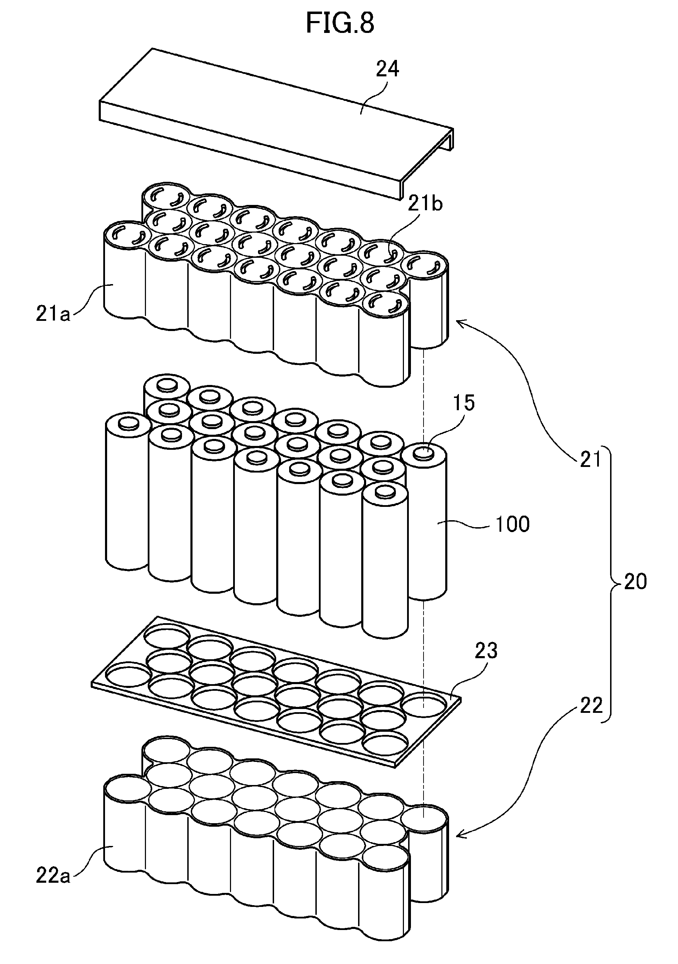

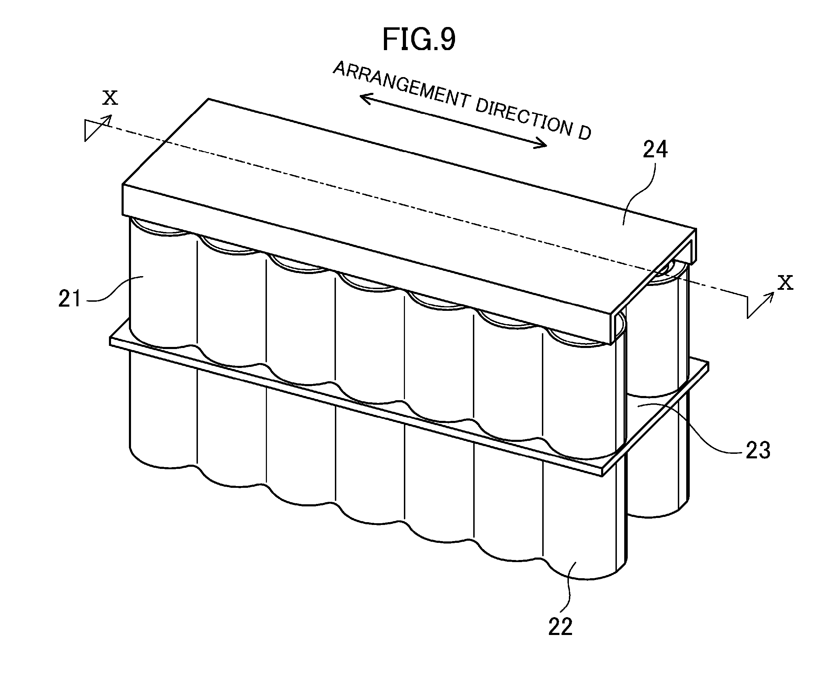

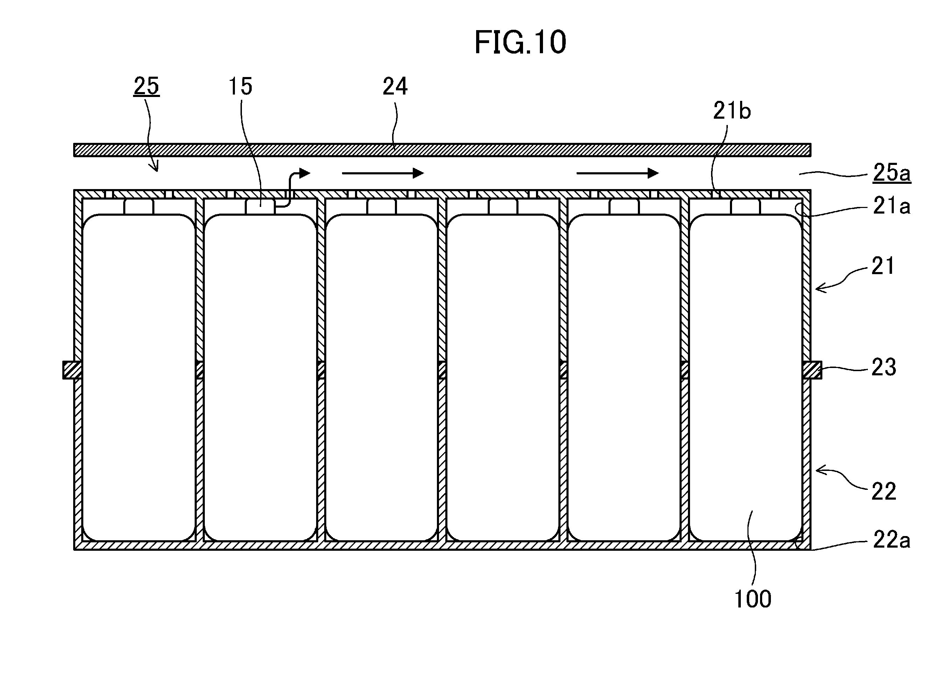

A battery block according to a variation of the second embodiment of the present disclosure will be described below with reference to FIGS. 8, 9, and 10. FIG. 8 is an exploded perspective view illustrating the structure of the battery block according to this variation. FIG. 9 is a perspective view illustrating the structure of the battery block according to this variation. FIG. 10 is a cross-sectional view illustrating the structure of the battery block according to this variation. Specifically, FIG. 10 is a cross-sectional view taken along the line X-X of FIG. 9. In FIGS. 8-10, the same reference characters as those shown in FIGS. 5-7 are used to represent elements equivalent to those in the second embodiment. Accordingly, in this variation, explanation similar to that in the second embodiment will be omitted as appropriate.

This variation differs from the second embodiment in the following respects.

In this variation, as shown in FIG. 8, for example, two communication holes 21b are formed in the bottom of each housing portion 21a of the first holder 21. As shown in FIG. 9, a lid body 24 is provided on the first holder 21. As shown in FIG. 10, an exhaust chamber 25 is formed between the first holder 21 and the lid body 24.

Gas exhausted outside the batteries 100 from the opening portions (see reference character 15a of FIG. 1) flows into the exhaust chamber 25 via the communication holes 21b. The gas flowing to the exhaust chamber 25 is exhausted outside the battery block from an outlet 25a.

The lid body 24 is made of thermal conductive metal. Furthermore, the lid body 24 is preferably made of conductive metal. The lid body 24 is preferably made of the same metal as the first holder 21 and the second holder 22.

This variation provides advantages similar to those of the second embodiment.

In addition, the communication holes 21b are formed in the bottom of each housing portion 21a of the first holder 21, and the lid body 24 is provided on the first holder 21. This forms the exhaust chamber 25 between the first holder 21 and the lid body 24, thereby allowing the gas exhausted outside the batteries 100 from the opening portions to flow to the exhaust chamber 25 via the communication holes 21b. The gas flowing to the exhaust chamber 25 is exhausted outside the battery block from the outlet 25a. This efficiently exhausts the gas, which has been exhausted outside the batteries 100 from the opening portions, outside the battery block. As a result, even if specific ones of the plurality of batteries 100 housed in the holder 20 abnormally generate heat, thermal influence on the batteries adjacent to the specific batteries is reduced.

The lid body 24 is made of thermal conductive metal. This efficiently conducts the heat, which has been conducted from the batteries 100 to the first holder 21, to the lid body 24, and released outside the lid body 24. This further makes the temperature of the plurality of batteries 100 housed in the holder 20 uniform.

The lid body 24 is made of conductive metal. This allows not only the first holder 21 but also the lid body 24, which is electrically connected to the first holder 21, to function as the current collector plate of the positive electrodes.

While in this variation, as shown in FIG. 1, a specific example has been described where the opening portion 15a is formed in the side surface of the raised portion of each cap 15, the present disclosure is not limited thereto. For example, an opening portion may be formed in the periphery of the bottom of each battery case. In this case, communication holes are formed in the periphery of the bottom of each housing portion of the second holder, and a lid body is provided on the second holder. As a result, an exhaust chamber, to which the gas exhausted outside the batteries from the opening portions flows via the communication holes, is formed between the second holder and the lid body.

### Third Embodiment

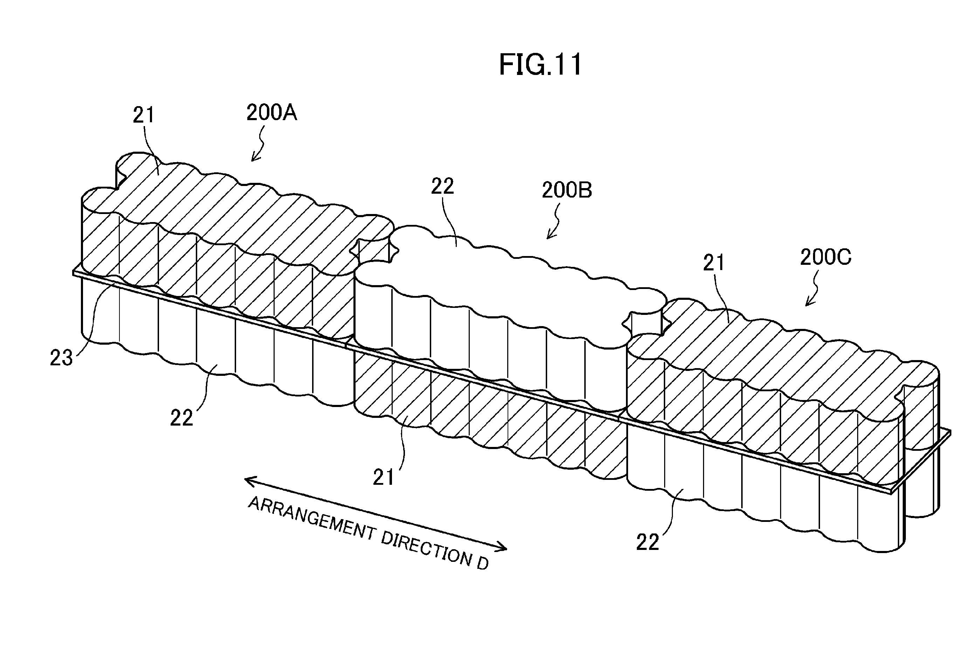

A battery module according to this embodiment will be described below with reference to FIG. 11. FIG. is a perspective view illustrating the structure of the battery module according to this embodiment.

The battery module according to this embodiment includes battery blocks 200A, 200B, and 200C according to the second embodiment.

As shown in FIG. 11, holders (see reference numeral 20 of FIG. 5) of the plurality of battery blocks 200A, 200B, and 200C are adjacent to one another in the arrangement direction D. The holders adjacent to one another in the arrangement direction D are electrically connected together.

Specifically, the plurality of battery blocks 200A, 200B, and 200C are arranged such that first holders 21 and second holders 22 are adjacent to one another in the arrangement direction D.

For example, the first holder 21 of the battery block 200A and the second holder 22 of the battery block 200B, which are adjacent to one another in the arrangement direction D, are electrically connected together by a conductive adhesive agent (not shown). For example, the first holder 21 of the battery block 200B and the second holder 22 of the battery block 200C, which are adjacent to one another in the arrangement direction D, are electrically connected together by a conductive adhesive agent (not shown). On the other hand, the second holder 22 of the battery block 200A and the first holder 21 of the battery block 200B, which are adjacent to one another in the arrangement direction D, are electrically insulated from one another, for example, by an insulating adhesive agent (not shown). The second holder 22 of the battery block 200B and the first holder 21 of the battery block 200C, which are adjacent to one another in the arrangement direction D, are electrically insulated from one another, for example, by an insulating adhesive agent (not shown). As such, the plurality of battery blocks are connected in series.

This embodiment provides advantages similar to those of the second embodiment.

While in this embodiment, a specific example has been described where the battery blocks are the battery blocks according to the second embodiment, the present disclosure is not limited thereto. For example, battery blocks according to the first embodiment may be used.

While in this embodiment, a specific example has been described where the plurality of battery blocks are connected in series, the present disclosure is not limited thereto.

For example, the plurality of battery blocks may be connected in parallel. In this case, the plurality of battery blocks are arranged such that first holders are adjacent to one another and second holders are adjacent to one another in the arrangement direction. For example, the adjacent first holders and the adjacent second holders in the arrangement direction are electrically connected by a conductive adhesive agent.

In this case, a common lid body may be provided on the plurality of first holders arranged in the arrangement direction. This provides advantages similar to those of the variation of the second embodiment. Furthermore, if the common lid body provided on the plurality of first holders is made of thermal conductive metal, the temperature of the plurality of first holders becomes uniform. As a result, the temperature of the plurality of batteries housed in the battery module becomes uniform.

### First Variation of Third Embodiment

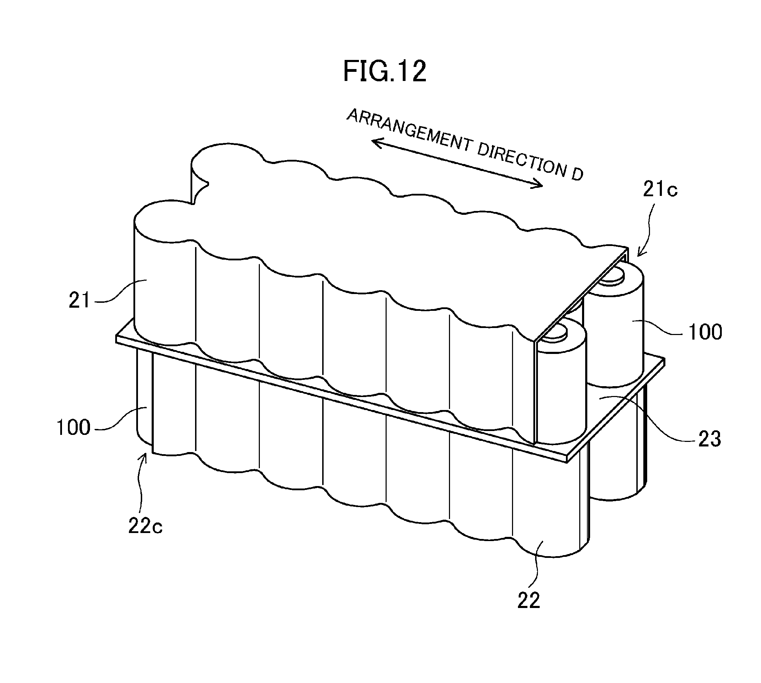

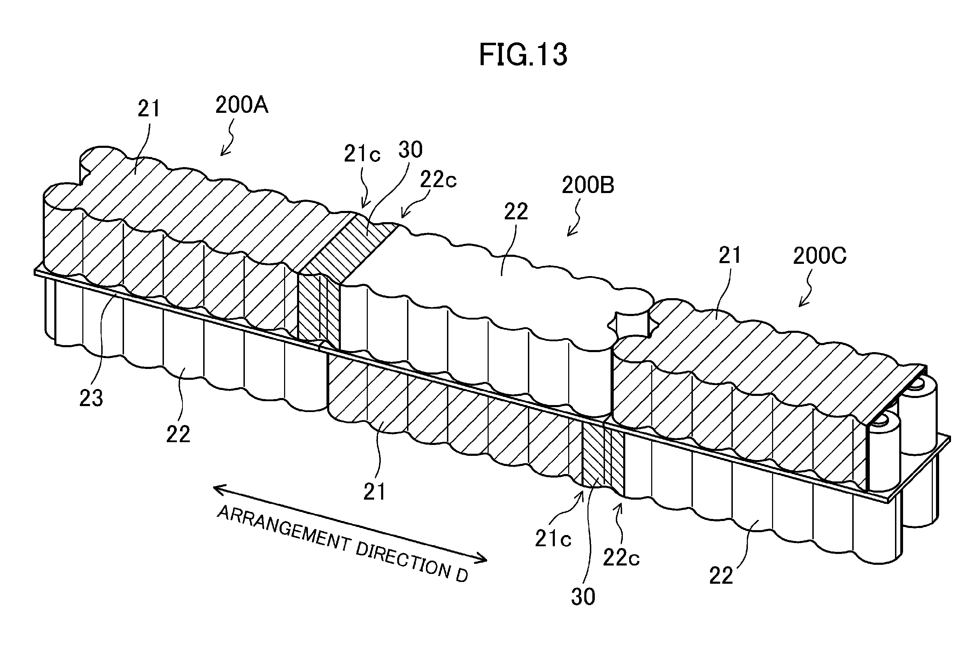

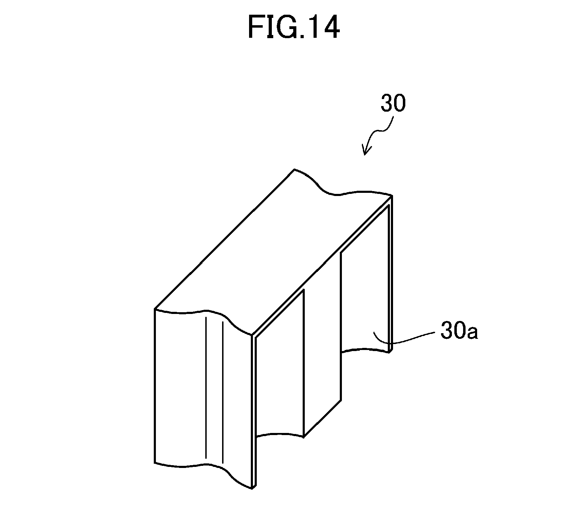

A battery module according to a first variation of the third embodiment of the present disclosure will be described below with reference to FIGS. 12, 13, and 14. FIG. 12 is a perspective view illustrating the structure of a battery block used in the battery module according to this variation. FIG. 13 is a perspective view illustrating the structure of the battery module according to this variation. FIG. 14 is a perspective view illustrating the structure of a connecting member. In FIG. 13, the same reference characters as those shown in FIG. 11 are used to represent elements equivalent to those in the third embodiment. Explanation similar to that in the third embodiment will be omitted as appropriate.

This variation differs from the third embodiment in the following respects.

In this variation, as shown in FIG. 12, a first holder 21 has a cutout portion (i.e., a first cutout portion) 21c exposing part of the batteries 100. The second holder 22 has a cutout portion (i.e., a second cutout portion) 22c exposing part of the batteries 100. The cutout portion 21c is located at one end in the arrangement direction D. The cutout portion 22c is located at the other end in the arrangement direction D.

As shown in FIG. 13, a connecting member 30 is provided between each pair of the cutout portion 21c of the first holder 21 and the cutout portion 22c of the second holder 22, which are adjacent to one another in the arrangement direction D.

The contact between each connecting member 30 and the corresponding cutout portion 21c of the first holder 21 is welded at some portions. The contact between each connecting member 30 and the corresponding cutout portion 22c of the second holder 22 is molded at some portions. As such, the connecting member 30 electrically connects each pair of the cutout portion 21c of the first holder 21 and the cutout portion 22c of the second holder 22, which are adjacent to one another in the arrangement direction D.

Each connecting member 30 covers the part of the batteries 100 exposed from the cutout portion 21c of the first holder 21, and the part of the batteries 100 exposed from the cutout portion 22c of the second holder 22.

One end of each second holder 22 in the arrangement direction D (i.e., the end opposite to the cutout portion 22c) and the other end of the adjacent first holder 21 in the arrangement direction D (i.e., the end opposite to the cutout portion 21c) are electrically insulated from one another by, for example, an insulating adhesive agent (not shown).

As shown in FIG. 14, each connecting member 30 includes cover portions 30a covering the part of the batteries 100 exposed from the cutout portion 21c of the first holder 21, or the part of the batteries 100 exposed from the cutout portion 22c of the second holder 22.

The side surfaces of the cover portions 30a abut the outer side surface of the part of the batteries 100 exposed from the cutout portion 21c of the first holder 21, or the outer side surfaces of the part of the batteries 100 exposed from the cutout portion 22c of the second holder 22.

Each connecting member 30 is made of conductive metal. Furthermore, the connecting member 30 is preferably made of thermal conductive metal. If the connecting member 30 is made of thermal conductive metal, the heat conducted from the batteries 100 to the first holder 21 or the second holder 22 can be efficiently conducted to the connecting member 30. The connecting member 30 is preferably made of the same metal as the first holder 21 and the second holder 22.

This variation provides advantages similar to those of the third embodiment.

In this variation, the first holder 21 has the cutout portion 21c at one end in the arrangement direction D. The second holder 22 has the cutout portion 22c at the other end in the arrangement direction D. The connecting member 30 physically and electrically connects each pair of the cutout portion 21c of the first holder 21 and the cutout portion 22c of the second holder 22, which are adjacent to one another in the arrangement direction D. The strength of the connection between the cutout portion 21c of the first holder 21 and the cutout portion 22c of the second holder 22 made by the connecting member 30 is greater than the strength of the connection between the first holder 21 and the second holder 22 made by a conductive adhesive agent as in the third embodiment. Therefore, the battery blocks are firmly connected as compared to the third embodiment.

While in this variation, a specific example has been described where the plurality of battery blocks are connected in series, the present disclosure is not limited thereto.

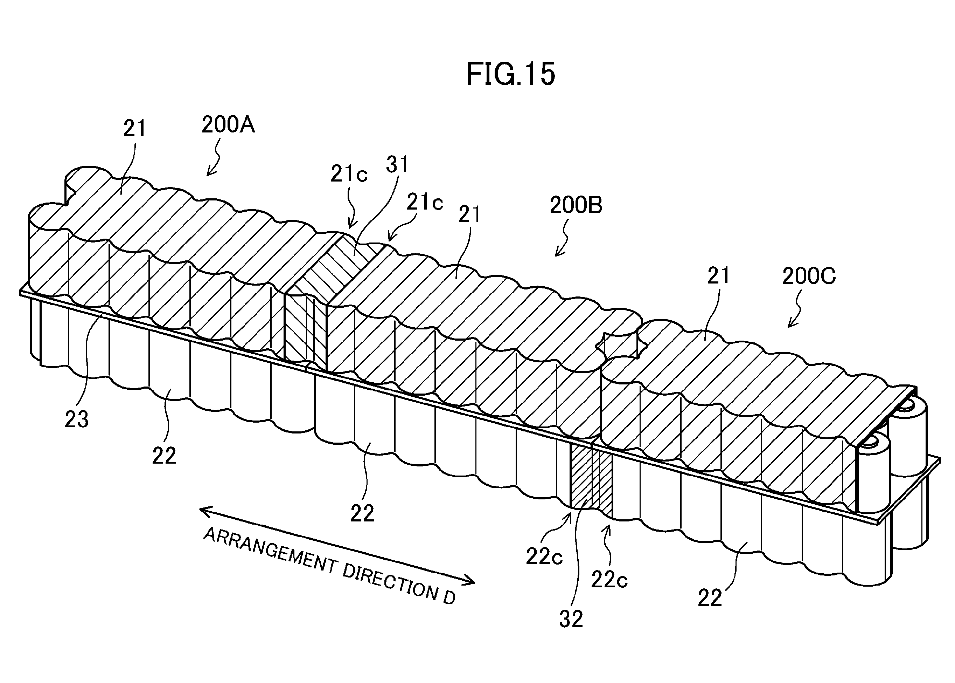

For example, as shown in FIG. 15, a plurality of battery blocks 200A, 200B, and 200C may be connected in parallel. In this case, the plurality of battery blocks 200A, 200B, and 200C are arranged such that first holders 21 are adjacent to one another, and second holders 22 are adjacent to one another in the arrangement direction D. A first connecting member 31 electrically connects each pair of cutout portions 21c of the first holders 21. A second connecting member 32 electrically connects each pair of cutout portions 22c of the second holders 22. Each pair of the other ends of the first holders 21 in the arrangement direction D is electrically connected together, for example, by a conductive adhesive agent (not shown). Each pair of the one ends of the second holder 22 in the arrangement direction D is electrically connected together, for example, by a conductive adhesive agent (not shown).

### Second Variation of Third Embodiment

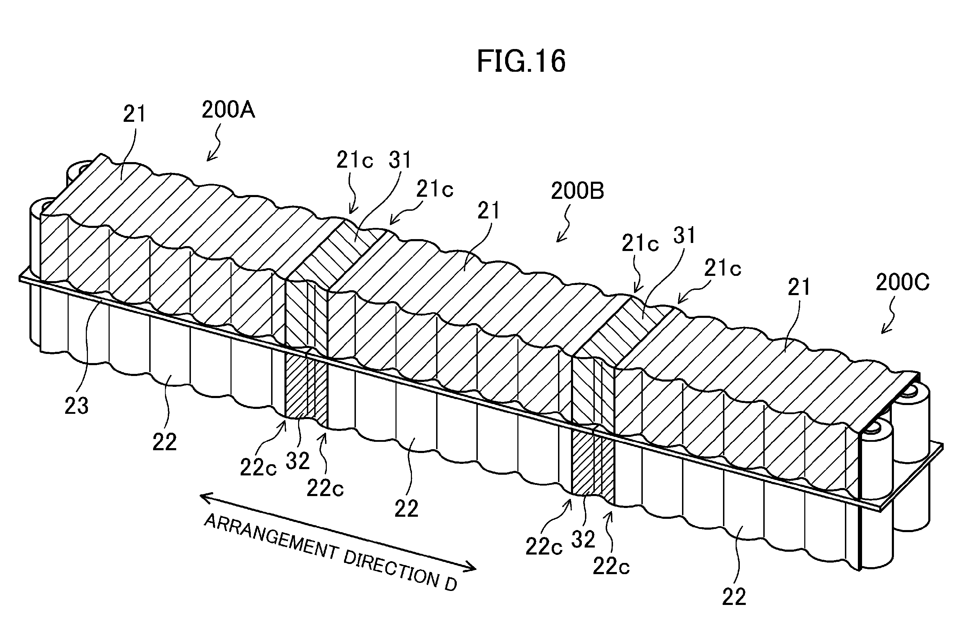

A battery module according to a second variation of the third embodiment of the present disclosure will be described below with reference to FIG. 16. FIG. 16 is a perspective view illustrating the structure of the battery module according to this variation. In FIG. 16, the same reference characters as those shown in FIG. 13 are used to represent elements equivalent to those in the first variation of the third embodiment. Explanation similar to that in the first variation of the third embodiment will be omitted as appropriate.

This variation differs from the first variation of the third embodiment in the following respects.

In the first variation of the third embodiment, as shown in FIG. 12, the cutout portion 21c of the first holder 21 is located at the one of the both ends in the arrangement direction D. The cutout portion 22c of the second holder 22 is located at the other of the both ends in the arrangement direction D.

As shown in FIG. 13, the plurality of battery blocks 200A, 200B, and 200C are arranged such that each first holder 21 is adjacent to one of the second holders 22 in the arrangement direction D. Thus, the cutout portion 21c of the first holder 21 is adjacent to the cutout portion 22c of the second holder 22 in the arrangement direction D. In the arrangement direction D, one end of the second holder 22 in the arrangement direction D is adjacent to the other end of the first holder 21 in the arrangement direction D.

Each connecting member 30 electrically connects each pair of the cutout portion 21c of the first holder 21 and the cutout portion 22c of the second holder 22. One end of each second holder 22 in the arrangement direction D is electrically insulated from the other end of the adjacent first holder 21 in the arrangement direction D, for example, by an insulating adhesive agent. As such, the plurality of battery blocks 200A, 200B, and 200C are connected in series.

On the other hand, in this variation, as shown in FIG. 16, cutout portions 21c of first holders 21 are located at both ends in the arrangement direction D. Cutout portions 22c of second holders 22 are at both ends in the arrangement direction D.

A plurality of battery blocks 200A, 200B, and 200C are arranged such that the first holders 21 are adjacent to one another, and the second holders 22 are adjacent to one another in the arrangement direction D. Thus, the cutout portions 21c of the first holders 21 are adjacent to one another, and the cutout portions 22c of the second holders 22 are adjacent to one another in the arrangement direction D.

A first connecting member 31 electrically connects each pair of the cutout portions 21c of the first holders 21. A second connecting member 32 electrically connects each pair of the cutout portions 22c of the second holders 22. As such, the plurality of battery blocks 200A, 200B, and 200C are connected in parallel.

This variation provides advantages similar to those of the third embodiment.

In addition, the cutout portions 21c of the first holders 21 are located at the both ends in the arrangement direction D. The cutout portions 22c of the second holders 22 are located at the both ends in the arrangement direction D. This firmly connects the battery blocks as compared to the first variation of the third embodiment.

While in this embodiment, a specific example has been described where the plurality of battery blocks 200A, 200B, and 200C are connected in parallel, the present disclosure is not limited thereto.

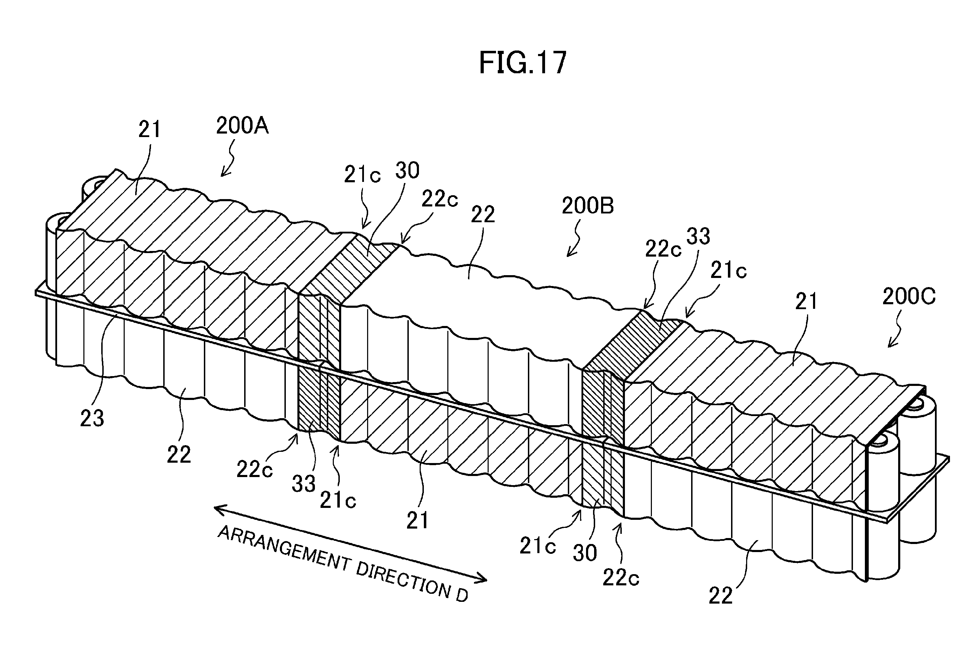

For example, as shown in FIG. 17, the plurality of battery blocks 200A, 200B, and 200C may be connected in series.

In this case, the plurality of battery blocks 200A, 200B, and 200C are arranged such that each first holder 21 is adjacent to one of the second holders 22 in the arrangement direction D. Thus, the cutout portion 21c of each first holder 21 is adjacent to the cutout portion 22c of the adjacent one of the second holder 22 in the arrangement direction D.

A connecting member 30 electrically connects the cutout portion 21c of the first holder 21 of the battery block 200A to the cutout portion 22c of the second holder 22 of the battery block 200B. Another connecting member 30 electrically connects the cutout portion 21c of the first holder 21 of the battery block 200B to the cutout portion 22c of the second holder 22 of the battery block 200C.

An insulating connecting member 33 is provided between the cutout portion 22c of the second holder 22 of the battery block 200A and the cutout portion 21c of the first holder 21 of the battery block 200B. The connecting member 33 electrically insulates the cutout portion 22c of the second holder 22 of the battery block 200A from the cutout portion 21c of the first holder 21 of the battery block 200B. Another insulating connecting member 33 is provided between the cutout portion 22c of the second holder 22 of the battery block 200B and the cutout portion 21c of the first holder 21 of the battery block 200C. The connecting member 33 electrically insulates the cutout portion 22c of the second holder 22 of the battery block 200B from the cutout portion 21c of the first holder 21 of the battery block 200C.

### INDUSTRIAL APPLICABILITY

The present disclosure increases the volumetric energy density of a battery block, and useful for a battery block and a battery module including the battery block. The battery module is utilized as a power source for driving a vehicle, an electric motorcycle, electric play equipment, etc.

### DESCRIPTION OF REFERENCE CHARACTERS

- 1: Positive Electrode
- 2: Negative Electrode
- 3: Separator
- 4: Electrode Group
- 5: Battery Case
- 6: Insulating Plate
- 7: Insulating Plate
- 8: Positive Electrode Lead
- 9: Negative Electrode Lead
- 10: Sealing Body
- 11: Metal Plate
- 11a: Opening
- 12: Metal Plate
- 12a: Opening
- 13: Gasket
- 14: Valve Body
- 15: Cap
- 15a: Opening Portion
- 16: Gasket
- 20: Holder
- 21: First Holder
- 21a: Housing Portion (First Housing Portion)
- 21b: Communication Hole
- 21c: Cutout Portion (First Cutout Portion)
- 22: Second Holder
- 22a: Housing Portion (Second Housing Portion)
- 22c: Cutout Portion (Second Cutout Portion)
- 23: Spacer
- 24: Lid Body
- 25: Exhaust Chamber
- 25a: Outlet
- 30: Connecting Member
- 31: First Connecting Member
- 32: Second Connecting Member
- 33: Connecting Member
- 100: Battery
- 200A, 200B, 200C: Battery Blocks

## Claims

1. A battery block comprising:
a plurality of tubular batteries arranged and housed in a holder, wherein
each of the batteries includes a first external terminal, and a second external terminal,
the holder includes
a first holder having first bottomed tubular housing portions housing upper portions of the batteries in an axis direction, and
a second holder having second bottomed tubular housing portions housing lower portions of the batteries in the axis direction,
the first holder electrically connects the first external terminals together, and
the second holder electrically connects the second external terminals together.

2. The battery block of claim 1, wherein
the first external terminals are located at upper ends of the batteries in the axis direction,
the second external terminals are located at lower ends of the batteries in the axis direction,
the first external terminals are in contact with inner bottom surfaces of the first tubular housing portions, and
the second external terminals are in contact with inner bottom surfaces of the second tubular housing portions.

3. The battery block of claim 1, wherein
each of the batteries has an opening portion at the upper end of the battery in the axis direction, the opening portion exhausting gas generated in the battery outside the battery,
each of the first housing portions has a communication hole at a bottom,
a lid body is provided on the first holder,
an exhaust chamber is formed between the first holder and the lid body, and
gas exhausted outside the battery from the opening portion flows to the exhaust chamber via the communication hole.

4. The battery block of claim 1, wherein
an insulating spacer is provided between the first holder and the second holder, openings penetrated by the batteries is formed in the insulating spacer,
end portions of the first housing portions are in contact with an upper surface of the spacer, and
end portions of the second housing portions are in contact with a lower surface of the spacer.

5. The battery block of claim 1, wherein
the first holder has a first cutout portion at at least one of both ends in an arrangement direction of the batteries, the first cutout portion exposing part of the batteries, and
the second holder has a second cutout portion at at least the other of the both ends in the arrangement direction, the second cutout portion exposing part of the batteries.

6. The battery block of claim 1, wherein
the first holder and the second holder are made of same metal.

7. The battery block of claim 3, wherein
the first holder, the second holder, and the lid body are made of same metal.

8. A battery module comprising the battery block of claim 1, wherein
a plurality of battery blocks are arranged such that holders are adjacent to one another in an arrangement direction of the batteries, and
the holders adjacent to one another in the arrangement direction are electrically connected together.

9. The battery module of claim 8, wherein
each first holder has a first cutout portion at at least one of both ends in the arrangement direction, the first cutout portion exposing part of the batteries,
each second holder has a second cutout portion at at least the other of the both ends in the arrangement direction, the second cutout portion exposing part of the batteries,
the plurality of battery blocks are arranged such that each first holder is adjacent to one of the second holders in the arrangement direction,
a connecting member is provided between each pair of the first cutout portion and the second cutout portion adjacent to one another in the arrangement direction, and
the connecting member electrically connects each pair of the first cutout portion of the first holder and the second cutout portion of the second holder adjacent to one another in the arrangement direction, and covers the part of the batteries exposed from the first cutout portion and the part of the batteries exposed from the second cutout portion.

10. The battery module of claim 8, wherein
each first holder has a first cutout portion at at least one of both ends in the arrangement direction, the first cutout portion exposing part of the batteries,
each second holder has a second cutout portion at at least the other of the both ends in the arrangement direction, the second cutout portion exposing part of the batteries,
the plurality of battery blocks are arranged such that the first holders are adjacent to one another and the second holders are adjacent to one another in the arrangement direction,
a first connecting member is provided between each pair of the first cutout portions adjacent to one another in the arrangement direction,
a second connecting member is provided between each pair of the second cutout portions adjacent to one another in the arrangement direction,
the first connecting member electrically connects the first cutout portions of the first holders adjacent to one another in the arrangement direction, and covers the part of the batteries exposed from the first cutout portions, and
the second connecting member electrically connects the second cutout portions of the second holders adjacent to one another in the arrangement direction, and covers the part of the batteries exposed from the second cutout portions.

11. The battery module of claim 8, wherein
the plurality of battery blocks are arranged such that the first holders are adjacent to one another and the second holders are adjacent to one another in the arrangement direction, and
a common lid body is provided on the first holders arranged in the arrangement direction.

## Amended claims

### Amended claims under Art. 19.1 PCT

**1.** A battery block comprising:
a plurality of tubular batteries arranged and housed in a holder, wherein
each of the batteries includes a first external terminal, and a second external terminal,
the holder includes
a first holder having first bottomed tubular housing portions housing upper portions of the batteries in an axis direction, and
a second holder having second bottomed tubular housing portions housing lower portions of the batteries in the axis direction,
the first holder electrically connects the first external terminals together, and
the second holder electrically connects the second external terminals together.

**2.** The battery block of claim 1, wherein
the first external terminals are located at upper ends of the batteries in the axis direction,
the second external terminals are located at lower ends of the batteries in the axis direction,
the first external terminals are in contact with inner bottom surfaces of the first tubular housing portions, and
the second external terminals are in contact with inner bottom surfaces of the second tubular housing portions.

**3.** The battery block of claim 1, wherein
each of the batteries has an opening portion at the upper end of the battery in the axis direction, the opening portion exhausting gas generated in the battery outside the battery,
each of the first housing portions has a communication hole at a bottom,
a lid body is provided on the first holder,
an exhaust chamber is formed between the first holder and the lid body, and gas exhausted outside the battery from the opening portion flows to the exhaust chamber via the communication hole.

**4.** The battery block of claim 1, wherein
an insulating spacer is provided between the first holder and the second holder,
openings penetrated by the batteries is formed in the insulating spacer,
end portions of the first housing portions are in contact with an upper surface of the spacer, and
end portions of the second housing portions are in contact with a lower surface of the spacer.

**5.** The battery block of claim 1, wherein
the first holder has a first cutout portion at at least one of both ends in an arrangement direction of the batteries, the first cutout portion exposing part of the batteries, and
the second holder has a second cutout portion at at least the other of the both ends in the arrangement direction, the second cutout portion exposing part of the batteries.

**6.** The battery block of claim 1, wherein
each of the first holder and the second holder is made of a conductive material.

**7.** The battery block of claim 3, wherein
each of the first holder, the second holder, and the lid body is made of a conductive material.

**8.** A battery module comprising the battery block of claim 1, wherein
a plurality of battery blocks are arranged such that holders are adjacent to one another in an arrangement direction of the batteries, and
the holders adjacent to one another in the arrangement direction are electrically connected together.

**9.** The battery module of claim 8, wherein
each first holder has a first cutout portion at at least one of both ends in the arrangement direction, the first cutout portion exposing part of the batteries,
each second holder has a second cutout portion at at least the other of the both ends in the arrangement direction, the second cutout portion exposing part of the batteries,
the plurality of battery blocks are arranged such that each first holder is adjacent to one of the second holders in the arrangement direction,
a connecting member is provided between each pair of the first cutout portion and the second cutout portion adjacent to one another in the arrangement direction, and
the connecting member electrically connects each pair of the first cutout portion of the first holder and the second cutout portion of the second holder adjacent to one another in the arrangement direction, and covers the part of the batteries exposed from the first cutout portion and the part of the batteries exposed from the second cutout portion.

**10.** The battery module of claim 8, wherein
each first holder has a first cutout portion at at least one of both ends in the arrangement direction, the first cutout portion exposing part of the batteries,
each second holder has a second cutout portion at at least the other of the both ends in the arrangement direction, the second cutout portion exposing part of the batteries,
the plurality of battery blocks are arranged such that the first holders are adjacent to one another and the second holders are adjacent to one another in the arrangement direction,
a first connecting member is provided between each pair of the first cutout portions adjacent to one another in the arrangement direction,
a second connecting member is provided between each pair of the second cutout portions adjacent to one another in the arrangement direction,
the first connecting member electrically connects the first cutout portions of the first holders adjacent to one another in the arrangement direction, and covers the part of the batteries exposed from the first cutout portions, and
the second connecting member electrically connects the second cutout portions of the second holders adjacent to one another in the arrangement direction, and covers the part of the batteries exposed from the second cutout portions.

**11.** The battery module of claim 8, wherein
the plurality of battery blocks are arranged such that the first holders are adjacent to one another and the second holders are adjacent to one another in the arrangement direction, and
a common lid body is provided on the first holders arranged in the arrangement direction.

**12.** The battery block of claim 6, wherein
the first holder and the second holder are made of metal.

**13.** The battery block of claim 7, wherein
the first holder, the second holder, and the lid body are made of metal.

**14.** The battery block of claim 12, wherein
the first holder and the second holder are made of same metal.

**15.** The battery block of claim 13, wherein
the first holder, the second holder, and the lid body are made of same metal.
